Europäisches Patentamt

(19) European Patent Office

Office européen des brevets

(11) Publication number: **0 005 632**
**B1**

## (12) EUROPEAN PATENT SPECIFICATION

(45) Date of publication of patent specification: **05.08.81**

(21) Application number: **79300862.4**

(22) Date of filing: **17.05.79**

(51) Int. Cl.³: **C 23 C 13/02,**
**C 23 C 13/04, C 23 D 5/10,**
**C 04 B 35/14, C 04 B 35/56**

(54) Plasma spray coating composition, method of coating articles and articles coated with the composition.

(30) Priority: **19.05.78 US 907530**

(43) Date of publication of application:
**28.11.79 Bulletin 79/24**

(45) Publication of the grant of the European patent:
**05.08.81 Bulletin 81/31**

(84) Designated Contracting States:
**BE DE FR GB SE**

(56) References cited:
**DE - B - 1 213 619**
**US - A - 3 274 007**
**US - A - 3 419 415**

(73) Proprietor: **FORD MOTOR COMPANY LIMITED**
**Eagle Way**
**Brentwood Essex CM13 3BW (GB)**

(73) Proprietor: **FORD-WERKE AKTIENGESELLSCHAFT**
**Ottoplatz 2 Postfach 210369**
**D-5000 Köln 21 (DE)**

(73) Proprietor: **FORD FRANCE SOCIETE ANONYME**
**344 Avenue Napoleon Bonaparte B.P. 307**
**F-92506 Rueil Malmaison Cedex (FR)**

(73) Proprietor: **Ford Motor Company**
**Dearborn Wayne Michigan (US)**

(72) Inventor: **Terner, Leslie Laszlo**
**7400 Finnegan Drive**
**West Bloomfield Michigan 48033 (US)**
Inventor: **Moskowitz, David**
**27450 Pierce**
**Southfield Michigan 48076 (US)**
Inventor: **Van Alsten, Roy Leonard**
**9191 Saraso Court**
**Redford Michigan 48239 (US)**

(74) Representative: **Drakeford, Robert William et al,**
**Ford Motor Company Limited 15/448, Research &**
**Engineering Centre Laindon**
**Basildon Essex SS15 6EE (GB)**

Courier Press, Leamington Spa, England.

Plasma spray coating composition, method of coating articles and articles coated with
the composition

This invention relates to plasma spray coating compositions, methods of coating articles and coated articles produced thereby.

Plasma sprayed coatings of materials which have discrete melting points have been used for many years. (See M. L. Thorpe, "The Plasma Jet and its Uses", *Research and Development* Volume 11, No. 1 (1960)). Plasma sprayed ceramic-oxide coatings are used as thermal barriers on metallic structural materials, (see J. A. Moch, "Ceramics and Refractory Coatings", *Material Engineering* 11, Page 101—108, 1974). Many rocketry and aerospace developments use such combinations as superalloys, carbides or silicides, plasma sprayed to protect a substrate (See, C. J. Nessler and J. R. Palermo, "Plasma Arc Coatings", *Materials in Design Engineering*, Pages 109—113, June 1962). The purpose of the plasma sprayed coatings is to improve the surface hardness, wear, friction, oxidation and/or corrosion resistance.

In a conventional plasma spray coating process, a jet of gas is directed onto a substrate and a high voltage is applied to the jet to ionise the gas, and to produce a high temperature plasma. Solid material, usually in the form of a powder is then fed into the plasma, which heats the solid to above its melting point and deposits the molten material onto the surface to be coated.

A particularly useful coating material, if it can be successfully applied to a surface of a substrate, is silicon carbide. The physical and mechanical characteristics of silicon carbide make it attractive for coating. In particular, the characteristics that make such a material attractive is its high temperature strength, hardness, wear, oxidation resistance, and resistance to neutron radiation damage at high temperature. The material also has good electrical conductivity. However, unlike other materials which have been plasma sprayed, silicon carbide does not melt: it sublimes at 2600°C.

Silicon carbide coatings on selected substrates have been achieved using chemical vapor deposition techniques. (See E. Fitzer and D. Kehr, "Carbon, Carbide and Silicide Coating", *Thin Solid Films 39*, 55—67, 1976). In this technique silicon carbide layers are formed by the simultaneous vapor deposition of silicon and carbon, derived from methylchlorosilanes, although mixture of silanes or chlorosilanes and hydrocarbons can be used. In another case, silicon carbide was deposited on nuclear fuel particles by technique of methyltrichlorosilane pyrolysis. These silicon-carbide-coated fuel particles were used in a carbon dioxide gas-cooled nuclear reactor. (See, C. W. Forest, P. Kennedy and I.V. Sherman, *UKAEA Reactor Group Report, TRG Report* 2053(s), 1970).

We have attempted to plasma-spray coat pure silicon carbide without success. When pure silicon carbide was sprayed on a substrate, the material actually deposited on the substrate consisted essentially of beta silicon carbide, silicon dioxide and a minute amount of silicon. The material applied was easily removed from the substrate, as it had no adherence of any measurable degree to the substrate. The coating could be either wiped or scraped from the substrate without difficulty.

U.S. patent 3,419,415 teaches the plasma spraying of a mixture containing a refractory carbide and at least five percent by weight, based on the molecularly bound carbon in the carbide, of excess carbon in a form capable of reacting with the metal of the refractory carbide at flame spraying temperatures to form a carbide. The patent indicates that the excess carbon is preferably in an amount of 10 to 100% by weight of the molecularly bound carbon. The patent mentions that silicon carbide may be one of the starting carbide materials.

We attempted to reproduce the process disclosed in U.S. patent 3,419,415 according to the patent teachings while using silicon carbide as one of the ingredients of the mixture to be arc sprayed. The other portion of the mixture was carbon. In two separate experiments carried out on the silicon carbide-carbon mixture, the results achieved by us did not live up to what was stated in the patent. In both experiments, the coating deposited on the substrate contained silicon carbide and silicon oxide, as well as minute traces of silicon in the range of parts per million. The adherence of this coating to the substrate was in the range from no adherence to a very low level of adherence. The deposited coatings could be wiped or scraped from the substrate surface with little or no trouble and, therefore, did not provide on the surface either a wear resistant or a thermal resistant coating. The results achieved by spraying a combined silicon carbide-carbon mixture, in our opinion, was the same as is achieved when silicon carbide is sprayed by itself.

In order to duplicate the coating procedure set forth in U.S. patent 3,419,415, as above described, we conducted a pair of experiments, as described below.

In the first experiment, 40 cc of beta silicon carbide powder was mixed with 12cc of graphite, 4cc of furfural and 50 cc alcohol, forming a coating compound where each individual silicon carbide particle was coated with a thin carbon film as per the instructions of the patent. This mixture was dried to form a powder and then plasma sprayed on several different substrates. The deposited coatings were tested for adherence and found to be easily removed from the substrates by a wiping or a scraping action. As stated above, an x-ray defraction pattern taken of some of the coatings showed that the coatings were formed of silicon carbide, silicon dioxide, and minor proportion of silicon in the parts per million range.

In a second experiment, commercial grade graphite was mixed with silicon metal powder and then plasma sprayed onto different substrates. This mixture contained 33% by volume graphite in

2

0 005 632

66.6% by volume silicon metal powder. The deposited coating was tested for adherence and was found to be removed easily from the substrate by wiping or scraping. Once again, the x-ray defraction characteristics of the coating indicated that the coating was made up of silicon carbide, silicon dioxide and a very minor proportion in parts per million of silicon. Thus, the process of U.S. patent 3,419,415 does not permit a silicon carbide-carbon coating to be tenaciously adherent to a substrate when flame sprayed thereon.

U.S. patent 3,274,077 discloses a high temperature resistant, self-healing coating and method of application. Generally, the method relates to the arc plasma spray coating of a composition which consists of a refractory oxide having silicon mixed therewith. In this particular case, the material which is arc plasma sprayed produces a coating on a substrate in which the silicon coats over and between the refractory oxide particles. The resulting coating on the article is one in which refractory oxides are associated with silicon. There is no interaction between the refractory oxide and the silicon associated therewith.

According to the present invention, there is provided a coating composition suitable for arc plasma spraying comprising finely-divided silicon in admixture with finely-divided silicon carbide.

The invention also includes a method of coating an article which comprises applying a coating composition according to the invention to the article by plasma spraying.

The invention further includes an article carrying coating comprising beta silicon carbide as a main ingredient and silicon as a main ingredient.

Although we do not wish to be limited by any theory, we believe that when silicon and silicon carbide are projected onto an exposed surface of a substrate by means of a plasma spray gun, the silicon carbide is sublimed to the gaseous state at about 2600°C (4700°F) and is then broken down to silicon and carbon by the plasma spray gun. The additional silicon is vaporized to the gaseous state by the high temperature of the plasma spray. A portion of the gaseous materials condense on the substrate. The carbon in flight or when condensed on the substrate reacts with silicon condensing on the substrate to form beta silicon carbide thereby to form a silicon carbide-silicon coating.

Desirably, the silicon carbide forms from 70 to 90% by volume of the mixture used for spraying and more desirably forms from 80 to 85% by volume of the mixture.

Preferably, the individual silicon carbide particles in the mixture used for spraying have a particle size of from 149 $\mu$m (100 mesh) to 44 $\mu$m (325 mesh) and more especially from 50 to 100 $\mu$m. The silicon particles may for example have a particle size in the range 200 to 44 $\mu$m, preferably 50 to 80. Mixtures in which the individual silicon particles in the mixture have a particle size of from 85 $\mu$m (180 mesh) to 44 $\mu$m (325 mesh) and the silicon carbide particles have a particle size of from 149 $\mu$m (100 mesh) to 44 $\mu$m (325 mesh) are particularly preferred.

The newly formed silicon carbides are in the beta-phase, even when hexagonal (alpha) silicon carbide is used in the starting material. Without the extra silicon in the spray powder mix, which acts as a binder, the newly formed beta silicon carbide does not bond adequately to the substrate. The formation of good coatings is further aided by the flow properties of the material used in the plasma process. The best results are obtained with free-flowing compositions. The flow properties of the composition are influenced by a number of factors, for example particle size and distribution.

In the preferred compositions of the invention the silicon carbide is in the form of hollow spheroidal, or microballoon, particles. Such particles have good flow properties and are easily entrained in a plasma jet.

The silicon carbide microballoons preferably have diameters in the range from 5 to 120 $\mu$m. Such material is preferably used in a mixture which silicon particles having a size in the range 85 $\mu$m (180 mesh) to 44 $\mu$m (325 mesh).

Our copending European Patent Application No. 79300734.5 discloses and claims a method of manufacturing silicon carbide in the form of microballoons (i.e. hollow spheroidal particles). According to that method, microballoon structures formed from an organic material which is heat decomposable into carbon and volatile organic matter are pyrolysed in an inert atmosphere. Such microballoon structures, which commonly have a diameter of from 5 to 130 $\mu$m are a wall thickness of from 0.1 to 0.5 $\mu$m, are readily available from commercial sources. The pyrolysis causes the organic material to give off its volatile matter and to form carbon with the microballoon structure intact. The pyrolysed microballoon structures are then mixed with finely-divided silicon particles, and the mixture is placed in an enclosed chamber which is then evacuated to remove oxygen and then heated to a temperature of from 875 to 925°C. At this temperature, low melting point impurities contained in the silicon are removed under the vacuum. A partial pressure of nitrogen is then established in the chamber to form a skin of silicon nitride on the silicon particles. The particles are then heated to 1540 to 1590°C and the vacuum is re-established so that the silicon nitride skin is removed from the particles thereby permitting the silicon to vaporise and to react with the carbon microballoons to form beta silicon carbide microballoons.

The composition and method of the invention may be used on a variety of metallic and non-metallic substrates in order to provide a protective coating on that substrate. The substrate may be composed of, for example, metal, ceramic, or carbide. The protective coating may be a thermal protective coating, wear protective coating, environment protective coating, or a protective coating for

3

whatever use desired. For example, if the coating is applied to materials used as machining elements, the coating provides a wear resistant surface which increases the useful life of the machining tool.

The silicon carbide content of the deposited coating can be varied by altering the ratio of silicon carbide and silicon in the coating composition. The composition of the coating also varies with the particle size of the materials used in the coating composition and the spraying condition, for example, the spraying distance. However, the coating produced by the method of the invention normally has a higher silicon content than the original coating composition. Preferably the coating contains from 15 to 70%, most preferably from 30 to 60% by volume of silicon carbide.

Arc plasma spraying is already known for applying a coating to a substrate. While many different types of arc plasma systems are available on the market, the equipment used by use in our development work is that sold in the United States of America under the trade mark "Avco", and is equipped with a powder feeder sold under the trade mark "Plasmadyne". The gas used in the spraying equipment is preferably argon and the temperature of the plasma spray is generally controlled by a current setting at 500 A. In practice, the current can vary from 400 to 600 A. The plasma flame temperature has been measured by several investigators and has been found to be as high as 16,600°C (30,000°F). In the tests carried out by us, the inlet argon gas pressure was monitored and maintained above $2.75 \times 10^5$ Pa (40 psi). The distance of spraying from the nozzle to the substrate was generally in the range from 10—15 cm (4 to 6 inches). The preferred particle sizes indicated previously in the specification were particularly suitable for this equipment and these operating conditions. Different particle sizes may be appropriate for other equipment and/or operating conditions.

The surface to be protected is preferably prepared by degreasing the same and roughening it before the plasma spray coating operation is carried out. In general, if the surface is dirty, it may be degreased by using an ultrasonic bath containing organic substances such as benzene, acetone, carbon tetrachloride, or some other suitable solvent as is well known in the art. The surface roughening can be accomplished by sand or glass blasting. In other cases, such as, for example, on an alumina surface, chemical etching may be used for surface roughening. The surface should be roughened only to a degree sufficient to provide for the laying down of a tightly adherent coating.

Slight roughening of the substrate surface improves the adherence between the coating and the substrate because the coating substrate bond obtained during plasma deposition is mainly a mechanical bond. However, some substrates also form a chemical bond with the coating as, for example, when the coating is applied on steel. Such a chemical bonding can be enhanced by post heat treatment.

The following examples illustrate the invention.

## Examples 1 to 6

In each case the materials indicated in the following table were applied to a metal substrate by plasma spraying using the equipment and operating conditions described above. The flow properties of the materials and the adherence of the coating produced were tested in each case. The flow propertes were rated "excellent" if the material flowed smoothly and evenly from the "Plasmadyne" powder feeder; "good" if the material flowed unevenly; "fair" if the material flowed only at a reduced rate, and "poor" if the material flowed intermittently. The adherence of the coating was rated "excellent" if the coating withstood scraping, grinding and polishing with a diamond wheel without separation or showing other adverse effects; "good" if the coating withstood scraping but not grinding or polishing and "fair" or "poor" if the coating could be wiped off the substrate.

The results are summarised in the following table.

TABLE 1

Properties of Coating Powders and Coatings on Metal Substrates

| Example No. | Type of SiC | Size Range of SiC, in microns | Size Range of Si, in microns | Mix Ratio Vol.% SiC/Si | Flow Properties | Adherence |
|---|---|---|---|---|---|---|
| 1 | $\alpha$ | 80 av | 170—88 | 75/25 | good | excellent |
| 2 | $\beta$ | 88—62 | 88—62 | 75/25 | good | good |
| 3 | $\alpha$ | 21 av | 44 av | 80/20 | fair | poor |
| 4 | $\beta$ | 0.7 av | 44 av | 80/20 | poor | poor |
| 5 | * | 0.5 av | 44 av | 33.3/66.6*** | poor | fair |
| 6** | $\beta$ | 1—125 | 82—62 | 80/20 | excellent | excellent |

\*    Made by spraying a commercially-brought graphite with Si powder
\*\*   SiC made from microballoons
\*\*\*  This is volume ratio of graphite/Si-not SiC/Si.

From the results, tabulated in Table 1, we conclude that the spraying powder containing the cubic silicon carbide made from microballoons is the best. Its flow and adherence properties are excellent and the fact that it is hollow, with a highly uniform shell thickness, permits the use of a wider range of particle sizes.

Examples 7 to 11

These examples demonstrate the relationship of the silicon content in the starting spray powder to the adherence and the silicon carbide present in the final deposited coat. In each case the silicon carbide used was in the form of beta silicon microballoons. The materials were applied to metal substrates using the same equipment and operating conditions as referred to in examples 1 to 6. The results are summarised in Table 2.

TABLE 2

| Example No. | SiC/Si Ratio in Powder | Flow of Powder | Adherence of Coating | SiC/Si Ratio After Coating |
|---|---|---|---|---|
| 7 | 100/none | excellent | none to poor | 100/trace* |
| 8 | 90/10 | excellent | good | 70/30** |
| 9 | 85/15 | excellent | excellent | 40/60 |
| 10 | 80/20 | excellent | excellent | 30/70 |
| 11 | 75/35 | excellent | excellent | 20/80 |

\*    Estimated from the x-ray diffraction trace by comparison with pre-mixed standards.
\*\*   Silicon dioxide ($SiO_2$) present.

X-ray diffraction traces were taken of all deposited coatings on the different substrates. From these x-ray diffraction traces, the coatings were identified as containing silicon and beta silicon carbide. The concentrations of the newly formed beta silicon carbides are dependent upon the starting powder and the spraying parameters, notably particle size, SiC-Si ratio, type of silicon carbide used, the spraying distance, and some other spraying related variables.

Table 3 lists various metal substrates which have been coated successfully with SiC-Si powder mixes of the invention. All the metallic substrates show excellent bonding with the deposited SiC-Si.

## O 005 632

### TABLE 3

#### Coatings on Metallic Substrates

| Substrate | Powdered Example No. | Deposited Coating Thickness in |
|---|---|---|
| Stainless steel (303) | 1,2,6 | ND* |
| Cold rolled steel (1018) | 1,2,6 | ~45 |
| High carbon steel (D—2) | 1,2 | 45—50 |
| 4118 SAE grade steel | 1,2 | ~30 |
| Aluminum 2024 T-351 | 1,2,6 | 7—45 |
| Brass (1/2 Hard) | 1,2,6 | ~40 |
| Copper | 1,2,6 | 30—50 |
| Inconel 600 | 6 | ND* |
| Nickel Chrome | 6 | ND* |
| High speed steel | 2,6 | ND* |

*Not determined (ND)

Table 4 lists the various ceramic substrates successfully plasma spray coated with silicon carbide-silicon powder mix. The coating thickness was not determined. In each case the substrate was successfully coated with the powder of example No. 2 and No. 6.

### TABLE 4

#### Coatings on Ceramic and Carbide Substrates

| Substrate | Quality of Bonding |
|---|---|
| Alumina (Al$_2$O3) | good |
| Hot pressed Si$_3$N$_4$ | excellent |
| Injection molded Si$_3$N$_4$ | excellent |
| "Sialon" (Si$_4$Al$_2$O$_2$N$_6$) | excellent |
| Tungsten carbide | excellent |
| Titanium carbide | excellent |
| Reaction sintered $\alpha$- SiC | excellent |
| Reaction sintered $\beta$- SiC | excellent |

Table 5 summarises the results of tests carried out to investigate the durability of the coating at high temperatures.

By scraping, grinding and polishing tests we have found the adherence between most substrates and the deposited coatings to be strong at room temperature. To determine the effect on the adherence at high temperature, selected samples were subjected to temperature cycling.

Sections cut from a 4118 SAE grade steel (carbon 0.17—0.23%, Mn 0.60—1.00%, Cr 0.30—0.70%, and Mo 0.08—15%) and from an alumina (Al$_2$O$_3$) substrate were plasma spray coated

6

# 0 005 632

with silicon carbide-silicon using the process described previously. These sections were thermally cycled in air, in resistance type of furnace. The furnace temperature was set to a pre-defined temperature and after the temperature was reached the sample was positioned, coating surface up, in the hot zone. The sample was kept at the set temperature for five minutes and then air quenched to room temperature. This cycling was repeated ten times at each temperature. During and after the ten cycles, the sample was examined for damage or other change, using the optical microscope.

The test was then continued at the next higher temperature.

TABLE 5

| Substrate | Temp in °C | No, of cycles | Cycling Time | Observed Effect |
|---|---|---|---|---|
| 4118 SAE Steel | 500 | 10 | 5 min/each | None |
| 4118 SAE Steel | 600 | 10 | 5 min/each | None |
| 4118 SAE Steel | 700 | 10 | 5 min/each | Substrate colour change, no change in coating. |
| 4118 SAE Steel | 800 | 10 | 5 min/each | Severe pitting on the substrate except where coated. |
| Alumina ($Al_2O_3$) | 1000 | 10 | 5 min/each | None |
| Alumina ($Al_2O_3$) | 1200 | 10 | 5 min/each | None |

Despite the difference in thermal expansion between the coating and the substrate, no separation, or cracking, resulted over the wide range of temperature used. (The linear thermal expansion coefficient of silicon carbide (SiC) is $4.4 \times 10^{-6}/°C$, of alumina ($Al_2O_3$) $8.0 \times 10^{-6}/°C$, silicon (Si) $4 \times 10^{-6}/°C$, and of 4118 SAE grade steel $11.7 \times 10^{-6}/°C$). The pitting observed on the 4118 SAE types of steel after the 800°C temperature cycle may be the result of a phase transformation which this type of steel undergoes at about 750°C. At this point, the expansion increases drastically.

In order to demonstrate the utility of the coating composition of the invention, the performances of two T-15 high speed steel cutting tools were compared one with the other. One had no coating and the other had a silicon carbide-silicon coating, in accordance with the invention. Both tools were used in a lathe to cut 1045 steel at a rate of $5.64 \times 10$ surface metres (185 surface feet) per minute with a cutting depth of 0.152 cm (0.060 inches) with a feed rate of 0.028 cm (0.011 inches) per revolution. A coolant, 589B, was used to cool the material being cut. At 25.1 minutes, the uncoated cutting tool failed due to excessive nose wear. A coated cutting tool failed by fracturing at 65.0 minutes of use when this test was repeated, an uncoated tool failed due to excessive nose wear at 31.7 minutes, whereas a coated tool failed due to fracturing at 81.5 minutes.

A similar test was then carried out on two tools using no coolant. The uncoated cutting tool failed by fracturing at 4.0 minutes of use. The coated cutting tool did not fail because the experiment stopped after 16.33 minutes. The measured nose wear on the coated tool, was 0.0025 cm (0.001 inch). An allowable nose wear is 0.025 cm (0.010 inches), so the coated tool still was not worn out.

Although these examples demonstrate the utility of the coating of this invention in protecting metal cutting tools, the coating has like utility in the many other areas.

## Claims

1. A coating composition suitable for arc plasma spraying comprising finely-divided silicon in admixture with finely-divided silicon carbide.

2. A composition according to claim 1 wherein the finely-divided silicon carbide has a particle size of from 149 $\mu$m (100 mesh) to 44 $\mu$m (325 mesh).

3. A composition according to claim 1 or claim 2 wherein the finely-divided silicon has a particle size of from 85 $\mu$m (180 mesh) to 44 $\mu$m (325 mesh).

4. A composition according to any one of claims 1 to 3 wherein the silicon carbide is in the form of microballoons of beta silicon carbide.

7

5. A composition according to claim 4 wherein the microballoons have a particle size of from 5 to 120 μm.

6. A composition according to any one of claims 1 to 5 wherein the silicon carbide forms from 70 to 90% by volume of the mixture of silicon and silicon carbide.

7. A composition according to claim 6 wherein the silicon carbide forms from 80 to 85% by volume of the said mixture.

8. A method of coating an article which comprises applying a coating composition according to any one of claims 1 to 7 thereto by plasma spraying.

9. An article carrying a coating comprising of beta silicon carbide as a main ingredient characterised in that the coating also contains silicon as a main ingredient.

10. An article according to claim 10 wherein the coating contains from 15 to 70% by volume of silicon carbide.

11. An article according to claim 9 or 10 wherein the coating contains from 30 to 60% by volume of silicon carbide.

## Patentansprüche

1. Zum Lichtbogenplasmaspritzen geeignete Beschichtungszusammensetzung, dadurch gekennzeichnet, dass sie feinverteiltes Silicium im Gemisch mit feinverteiltem Siliciumcarbid enthält.

2. Zusammensetzung nach Anspruch 1, dadurch gekennzeichnet, dass das feinverteilte Siliciumcarbid eine Teilchengrösse von 149 μm (100 mesh) bis 44 μm (325 mesh) besitzt.

3. Zusammensetzung nach Anspruch 1 oder 2, dadurch gekennzeichnet, dass das feinverteilte Silicium eine Teilchengrösse von 85 μm (180 mesh) bis 44 μm (325 mesh) besitzt.

4. Zusammensetzung nach einem der Ansprüche 1 bis 3, dadurch gekennzeichnet, dass das Siliciumcarbid in Form von Mikroballons aus β-Siliciumcarbid vorliegt.

5. Zusammensetzung nach Anspruch 4, dadurch gekennzeichnet, dass die Mikroballons eine Teilchengrösse von 5 bis 120 μm aufweisen.

6. Zusammensetzung nach einem der Ansprüche 1 bis 5, dadurch gekennzeichnet, dass der Siliciumcarbidanteil im Gemisch aus Silicium und Siliciumcarbid 70 bis 90 Vol.-% beträgt.

7. Zusammensetzung nach Anspruch 6, dadurch gekennzeichnet, dass der Siliciumcarbidanteil in besagtem Gemisch 80 bis 85 Vol.-% beträgt.

8. Verfahren zur Beschichtung von Gegenständen, dadurch gekennzeichnet, dass man eine Beschichtungszusammensetzung nach einem der Ansprüche 1 bis 7 durch Plasmaspritzen darauf aufbringt.

9. Gegenstände mit einer Beschichtung aus β-Siliciumcarbid als einem der Hauptbestandteile, dadurch gekennzeichnet, dass die Beschichtung Silicium als weiteren Hauptbestandteil enthält.

10. Gegenstände nach Anspruch 10, dadurch gekennzeichnet, dass die Beschichtung 15 bis 70 Vol.-% Siliciumcarbid enthält.

11. Gegenstände nach Anspruch 9 oder 10, dadurch gekennzeichnet, dass die Beschichtung 30 bis 60 Vol.-% Siliciumcarbid enthält.

## Revendications

1. Composition de revêtement à pulvériser au plasma avec arc, caractérisée en ce qu'elle comprend du silicium finement divisé en mélange avec du carbure de silicium finement divisé.

2. Composition suivant la revendication 1, caractérisée en ce que le carbure de silicium finement divisé a une granulométrie de 149 μm à 44 μm.

3. Composition suivant la revendication 1 ou 2, caractérisée en ce que le silicium finement divisé a une granulométrie de 85 μm à 44 μm.

4. Composition suivant l'une quelconque des revendications 1 à 3, caractérisée en ce que le carbure de silicium se présente sous forme de microbulles de carbure de silicium β.

5. Composition suivant la revendication 4, caractérisée en ce que les microbulles ont une granulométrie de 5 à 120 μm.

6. Composition suivant l'une quelconque des revendications 1 à 5, caractérisée en ce que le carbure de silicium forme 70 à 90% en volume du mélange de silicium et de carbure de silicium.

7. Composition suivant la revendication 6, caractérisée en ce que le carbure de silicium forme 80 à 85% en volume du mélange.

8. Procédé pour revêtir un produit manufacturé, caractérisé en ce qu'on pulvérise au plasma une composition de revêtement suivant l'une quelconque des revendications 1 à 7 sur le produit manufacturé.

9. Produit manufacturé portant un revêtement comprenant du carbure de silicium β comme l'un des constituants principaux, caractérisé en ce que le revêtement contient aussi du silicium comme l'un des constituants principaux.

**0 005 632**

10. Produit manufacturé suivant la revendication 8, caractérisé en ce que le revêtement contient 15 à 70% en volume de carbure de silicium.

11. Produit manufacturé suivant la revendication 9 ou 10, caractérisé en ce que le revêtement contient 30 à 60% en volume de carbure de silicium.

9